# EUROPÄISCHE PATENTSCHRIFT

(11) **EP 3 430 701 B1**
(45) Veröffentlichungstag und Bekanntmachung des Hinweises auf die Patenterteilung: **05.02.2020**
(21) Anmeldenummer: 17713187.7
(22) Anmeldetag: 14.03.2017
(51) Int. Cl.: A47L 11/202, H02J 7/00, A47L 9/28

(54) **HAUSHALTSGERÄT UND VERFAHREN ZUM BETREIBEN EINES HAUSHALTSGERÄTS**
DOMESTIC APPLIANCE AND METHOD FOR OPERATING A DOMESTIC APPLIANCE
APPAREIL MÉNAGER ET PROCÉDÉ DE FONCTIONNEMENT D'UN APPAREIL MÉNAGER

(30) Priorität: 17.03.2016 DE 102016104956
(43) Veröffentlichungstag der Anmeldung: 23.01.2019
(73) Patentinhaber: Vorwerk & Co. Interholding GmbH, 42275 Wuppertal (DE)
(72) Erfinder: CORNELIßEN, Markus, 53332 Bornheim (DE)
(74) Vertreter: Cohausz & Florack
(86) Internationale Anmeldenummer: PCT/EP2017/055916
(87) Internationale Veröffentlichungsnummer: WO 2017/157891

(56) Entgegenhaltungen:
- WO-A1-2014/000794
- DE-A1-102008 043 212
- DE-A1-102011 005 711
- DE-A1-102011 081 842

## Beschreibung

Die Erfindung betrifft ein Haushaltsgerät, umfassend mindestens einen elektrischen Energiespeicher eingerichtet zum Versorgen von mindestens einem Verbraucher des Haushaltsgeräts mit elektrischer Leistung, mindestens eine Steuereinrichtung mit mindestens einer Steuereinheit eingerichtet zum Steuern der Leistungsabgabe an den Verbraucher abhängig von einer eingestellten Leistungsstufe, wobei für den Betrieb des Verbrauchers mit einer ersten Leistungsstufe eine erste Sollbetriebszeit abhängig von einem Referenzladezustand des elektrischen Energiespeichers vorgegeben ist. Darüber hinaus betrifft die Erfindung ein Verfahren zum Betreiben eines Haushaltsgeräts und ein Computerprogramm.

Bei elektrisch betriebenen Haushaltsgeräten werden als Energiequellen vermehrt elektrische Energiespeicher eingesetzt, um einen kabellosen Betrieb zu ermöglichen und damit den Benutzerkomfort zu steigern. Insbesondere kann mindestens ein elektrischer Verbraucher eines Haushaltsgeräts von einem elektrischen Energiespeicher mit elektrischer Leistung versorgt werden. Die Leistungsabgabe wird in der Regel über eine Steuereinrichtung gesteuert. Abhängig von einer eingestellten Leistungsstufe steuert die Steuereinrichtung die Leistungsabgabe an den mindestens einen Verbraucher.

Der elektrische Energiespeicher eines Haushaltsgeräts ist derart ausgelegt, dass der elektrische Verbraucher des Haushaltsgeräts bei einem (nahezu) maximalen Ladezustand für eine vorgegebene Sollbetriebszeit (z.B. T_{Soll} = x min) mit einer eingestellten Leistungsstufe (z.B. einem Betriebsleistungswert P_{B} = y W) betrieben werden kann.

Ein beispielhaftes Haushaltsgerät in Form eines Haushaltsreinigungsgeräts ist ein Staubsauger. Der Staubsauger kann über einen Grundkörper und ein mit dem Grundkörper verbindbares Zubehör, wie eine Saugeinheit bzw. Düseneinheit zum Reinigen von Oberflächen, verfügen. In dem Grundkörper ist insbesondere eine Saugvorrichtung angeordnet. Die Saugvorrichtung weist ein Arbeitselement in Form eines Sauggebläses auf, welches von einem elektrischen Verbraucher in Form eines Elektromotors angetrieben werden kann. Über die Saugvorrichtung können durch einen zwischen der Saugvorrichtung und dem Zubehör angeordneten Saugkanal Partikel angesaugt werden, die sich auf der zu reinigenden Oberfläche befinden.

Bei einem derartigen Staubsauger kann vorgesehen sein, dass der Akkumulator derart ausgelegt ist, dass der Elektromotor bei einer eingestellten ersten Leistungsstufe und ausgehend von einem Referenzladezustand mit einer vorgegebenen Sollbetriebszeit betrieben werden kann. Beispielsweise kann bei einer eingestellten ersten maximalen Leistungsstufe (z.B. P_{B1} = 250 W) und einem maximalen Ladezustand als Referenzladezustand der Elektromotor mit dieser Leistungsstufe für eine erste Sollbetriebszeit T_{Soll} = 10 min betrieben werden.

Problematisch bei herkömmlichen Haushaltsgeräten ist, dass sich im Laufe der Lebensdauer des Haushaltsgeräts die Leistungsfähigkeit des elektrischen Energiespeichers verringert. Diese Verschlechterung tritt auch bei Verwendung von Lithium-Ionen Akkumulatoren als Energiespeicher auf. Eine entsprechende Leistungsreduktion des Energiespeichers hat insbesondere zur Folge, dass die oben genannte Sollbetriebszeit nicht mehr erreicht werden kann. Mit anderen Worten verringert sich die tatsächlich Betriebszeit gegenüber der vorgegebenen Sollbetriebszeit. Bei dem oben genannten Beispiel kann sich die Betriebszeit unter den gleichen Voraussetzungen auf T_{B} = 8 min und weniger reduzieren. Die verringerte Betriebszeit hat wiederum einen reduzierten Benutzerkomfort zur Folge.

Zur Lösung von diesem Problem ist es aus dem Stand der Technik bekannt, Energiespeicher mit einer größeren Kapazität in Haushaltsgeräte einzubauen, als es zur Erreichung der vorgebebenen Sollbetriebszeit erforderlich ist. So wird bei dieser bekannten Lösung zunächst nicht die gesamte Kapazität des eingebauten Energiespeichers abgerufen. Mit steigender Lebenszeit und insbesondere mit steigender Lade- und Entladezyklenzahl wird mittels einer Steuereinrichtung nach und nach mehr Kapazität zur Verfügung gestellt und genutzt.

Zwar kann hierdurch erreicht werden, dass auch im Laufe der Lebensdauer des Haushaltsgeräts die vorgegeben Sollbetriebszeit erreicht wird. Nachteilig an dieser Lösung ist jedoch, dass beispielsweise Akkumulatoren mit größerer Kapazität das Gewicht des Haushaltsgeräts steigern, größeren Bauraum erfordern und zudem die Kosten des Haushaltsgeräts erhöhen.

Ferner ist aus der DE 10 2011 081842 A1 ein Staubsauger mit einem Akkumulator bekannt, wobei der Staubsauger eine Berechnungseinheit aufweist, eingerichtet zum Berechnen einer Restlaufzeit eines durch einen Akkumulator betriebenen Staubsaugers in Abhängigkeit einer ermittelten aktuell verfügbaren elektrischen Energie des Akkumulators und einer bestimmten aktuellen Leistungsaufnahme des Staubsaugers.

Daher liegt der Erfindung die Aufgabe zugrunde, ein Haushaltsgerät bereitzustellen, welches die Nachteile der bekannten Haushaltsgeräte zumindest reduziert und insbesondere den Benutzerkomfort des Haushaltsgeräts in einfacher Weise verbessert.

Diese Aufgabe wird gemäß einem ersten Aspekt durch ein Haushaltsgerät gemäß Patentanspruch 1 gelöst. Das Haushaltsgerät umfasst mindestens einen elektrischen Energiespeicher eingerichtet zum Versorgen von mindestens einem Verbraucher des Haushaltsgeräts mit elektrischer Leistung. Das Haushaltsgerät umfasst mindestens eine Steuereinrichtung mit mindestens einer Steuereinheit eingerichtet zum Steuern der Leistungsabgabe an den Verbraucher abhängig von einer eingestellten Leistungsstufe. Für den Betrieb des Verbrauchers mit einer ersten Leistungsstufe ist eine erste Sollbetriebszeit abhängig von einem Referenzladezustand des elektrischen Energiespeichers vorgegeben. Die Steuereinrichtung umfasst mindestens eine Erfassungseinheit eingerichtet zum Erfassen des Ladezustands des elektrischen Energiespeichers. Die Steuereinrichtung umfasst mindestens eine Bestimmungseinheit eingerichtet zum Bestimmen der tatsächlichen Betriebszeit basierend auf der eingestellten ersten Leistungsstufe und des erfassten Ladezustands. Die Steuereinrichtung umfasst mindestens eine Vergleichseinheit eingerichtet zum Vergleichen der bestimmten tatsächlichen Betriebszeit und der ersten Sollbetriebszeit. Die Steuereinheit ist zum Bewirken einer Reduzierung der Leistungsabgabe an den Verbraucher um mindestens einen ersten vorgegebenen Leistungsreduktionswert eingerichtet, wenn die bestimmte tatsächliche Betriebszeit zumindest geringer ist als die erste Sollbetriebszeit.

Indem im Gegensatz zum Stand der Technik die an den mindestens einen Verbraucher abgegebene Leistung bei einer Detektion, dass die vorgegebene Sollbetriebszeit in einer bestimmten Leistungsstufe nicht erreicht werden wird, reduziert wird, kann die gewünschte und vorgegebene Sollbetriebszeit erreicht und damit der Betriebskomfort für den Benutzer verbessert werden. Insbesondere kann auf die Implementierung eines Energiespeichers mit größerer Kapazität verzichtet werden. In einfacher, kostengünstiger und bauraumarmer Weise wird ein Haushaltsgerät bereitgestellt, bei dem auch nach einer Vielzahl von Lade- und Entladezyklen (z.B. > 250) die vorgegebene Sollbetriebszeit erreicht wird.

Beispielhafte und nicht abschließende Haushaltsgeräte sind Haushaltsreinigungsgeräte, Küchengeräte und Werkzeuge für den Haushalt. Das Haushaltsgerät umfasst mindestens einen (wiederaufladbaren) elektrischen Energiespeicher. Ein wiederaufladbarer Energiespeicher ist eingerichtet, elektrische Energie zu speichern und bei Bedarf an mindestens einen elektrischen Verbraucher abzugeben. Vorzugsweise ist ein wiederaufladbarer elektrischer Energiespeicher in Form eines Akkumulators, wie einem Lithium-Ionen Akkumulator, vorgesehen.

Darüber hinaus verfügt das Haushaltsgerät über mindestens einen elektrischen Verbraucher, wie einem Elektromotor. Der Verbraucher kann mit mindestens einer Leistungsstufe, vorzugsweise mit einer Mehrzahl von unterschiedlichen Leistungsstufen, betrieben werden. Für die mindestens eine Leistungsstufe kann ein Betriebsleistungswert vorgegeben sein. In Abhängigkeit der eingestellten Leistungsstufe steuert eine Steuereinheit einer Steuereinrichtung die Leistungsabgabe an den Verbraucher. Insbesondere wird eine Leistung entsprechend dem Betriebsleistungswert der eingestellten Leistungsstufe an den Verbraucher geliefert.

Hierbei ist für eine erste Leistungsstufe eine erste Sollbetriebszeit vorgegeben. Für mindestens eine weitere Leistungsstufe kann eine weitere Sollbetriebszeit vorgegeben sein. Eine Sollbetriebszeit gibt die Zeit an, die der mindestens eine Verbraucher ausgehend von einem Referenzladezustand mit einer bestimmten Leistungsstufe betrieben werden soll. Der Referenzladezustand ist vorliegend insbesondere der maximale Ladezustand. Eine Sollbetriebszeit ist daher insbesondere die maximale Betriebszeit des mindestens einen Verbrauchers, insbesondere des Haushaltsgeräts, bezogen auf die eingestellte Leistungsstufe.

Um auch nach einer Alterung eines elektrischen Energiespeichers die Sollbetriebszeit zu erreichen, ist vorgesehen, dass während des (Energiespeicher-)Betriebs des Haushaltsgeräts basierend auf einem erfassten (augenblicklichen) Ladezustand des elektrischen Energiespeichers und der (augenblicklichen) Leistungsstufe die tatsächliche Betriebszeit, die erreicht werden kann, bestimmt wird.

Zur Erfassung des Ladezustands ist eine Erfassungseinheit vorgesehen. Die Erfassungseinheit kann beispielsweise eingerichtet sein, eine chemische, spannungsabhängige, Strom-integrative, druckabhängige und/oder Energiespeicher-Impedanz Messung durchzuführen.

Die bestimmte tatsächliche Betriebszeit wird mit der ersten Sollbetriebszeit verglichen. Es versteht sich, dass für die Durchführung des Vergleichs die bereits abgelaufene Betriebszeit berücksichtigt werden kann. Beispielsweise kann die tatsächlich verbleibende Betriebszeit mit der verbleibenden ersten Sollbetriebswertzeit verglichen werden.

Ist die bestimmte tatsächliche Betriebszeit größer oder im Wesentlichen gleich der ersten Sollbetriebszeit, wird der mindestens eine Verbraucher mit unveränderter Leistung, insbesondere mit einem unveränderten Betriebsleistungswert, versorgt.

Wird hingegen detektiert, dass die bestimmte tatsächliche Betriebszeit zumindest geringer ist als die erste Sollbetriebszeit, bewirkt die Steuereinheit eine Reduzierung der Leistungsabgabe an den elektrischen Verbraucher von dem elektrischen Energiespeicher um mindestens einen ersten vorgegebenen Leistungsreduktionswert. Mit anderen Worten wird bei Detektion einer negativen Abweichung, die insbesondere dann vorliegt, wenn die bestimmte tatsächliche Betriebszeit kleiner als die erste Sollbetriebszeit, die abgegebene Leistung von der Steuereinheit reduziert. Es versteht sich, dass gemäß einer Ausführungsform diese Abweichung einen vorgebbaren Mindestwert übersteigen muss, damit eine Reduktion der Leistung veranlasst wird.

Während des Betriebs des Haushaltsgeräts in einer Leistungsstufe können zwei oder mehr Verbraucher des Haushaltsgeräts mit Leistung von dem elektrischen Energiespeicher versorgt werden. In diesem Fall kann vorgesehen sein, dass der Betriebsleistungswert nur von einem oder von mehreren Verbrauchern durch die Steuereinrichtung reduziert wird. Wenn der Betriebsleistungswert bei mehreren Verbrauchern reduziert wird, kann vorzugsweise für jeden Verbraucher ein erster (individueller) Leistungsreduktionswert vorgegeben sein.

Gemäß einer ersten Ausführungsform des erfindungsgemäßen Haushaltsgeräts kann die Steuereinheit eingerichtet sein, die Leistungsabgabe um den ersten Leistungsreduktionswert frühestens nach Ablauf einer ersten vorgegebenen Betriebsdauer des Verbrauchers zu reduzieren. Beispielsweise kann die Steuereinrichtung einen Zeitmesser aufweisen, der beim Start des Betriebs des Haushaltsgeräts mit einer eingestellten Leistungsstufe zu laufen beginnt. Frühestens nach Detektion des Ablaufs der ersten vorgegebenen Betriebsdauer kann eine Reduzierung der Leistung bewirkt werden. Beispielsweise kann nach Ablauf der ersten vorgegebenen Betriebsdauer zunächst die tatsächliche Betriebsdauer bestimmt und der obige Vergleich durchgeführt werden. Es versteht sich, dass diese beiden Schritte zumindest teilweise auch vor Ablauf der ersten vorgegebenen Betriebsdauer durchgeführt werden können. Hierdurch wird eine unmittelbare und ungewünschte Leistungsreduktion beim Betrieb des Haushaltsgeräts vermieden. Besonders bevorzugt ist, wenn die erste vorgegebene Betriebsdauer von der ersten Sollbetriebszeit abhängt. Vorzugsweise kann die erste vorgegebene Betriebsdauer zwischen 30 % und 70 % der ersten Sollbetriebszeit, vorzugsweise zwischen 40 % und 60 % der ersten Sollbetriebszeit, liegen.

Es kann vorgesehen sein, dass die Erfassungseinheit den Ladezustand zu bestimmten Zeitpunkten erfasst und der Bestimmungseinheit zur Verfügung stellt. Vorzugsweise kann die Erfassungseinheit zum im Wesentlichen kontinuierlichen Erfassen des Ladezustands des elektrischen Energiespeichers eingerichtet sein. Hierdurch wird sichergestellt, dass zu jeder Zeit der augenblickliche bzw. aktuelle Ladezustand des elektrischen Energiespeichers zur Verfügung steht.

Ferner ist erkannt worden, dass zur Erhöhung des Benutzerkomforts die Leistung, wenn erforderlich, derart reduziert werden sollte, dass die Leistungsreduzierung durch den Benutzer (nahezu) unbemerkt bleibt. Gemäß einer bevorzugten Ausführungsform des Haushaltsgeräts kann der erste vorgegebene Leistungsreduktionswert zwischen 1 % und 10 % des Betriebsleistungswerts der eingestellten Leistungsstufe, vorzugsweise zwischen 3 % und 7 % des Betriebsleistungswerts der eingestellten Leistungsstufe, liegen. Insbesondere bei einem ersten Leistungsreduktionswert von unter 7 % macht sich für den Benutzer des Haushaltsgeräts die Leistungsabsenkung kaum bemerkbar. Bei einem Haushaltsgerät in Form eines Staubsaugers bleibt beispielsweise das Reinigungsergebnis subjektiv erhalten. Zudem ändert sich bei einem als Elektromotor ausgebildeten Verbraucher die Motordrehzahl bei einer entsprechenden Leistungsabsenkung kaum.

Insbesondere kann bei einer bevorzugten Ausführungsform die Reduzierung der Leistung nicht unmittelbar (in einem Schritt) um den Leistungsreduktionswert erfolgen, sondern stufenweise, insbesondere kontinuierlich über einen vorgebbaren Zeitraum, bewirkt werden. Eine abrupte Leistungsänderung kann vermieden werden.

Bei einer weiteren Ausführungsform des Haushaltsgeräts kann vorgesehen sein, dass nach einer Reduzierung der Leistungsabgabe die Bestimmungseinheit zum (erneuten) Bestimmen der tatsächlichen Betriebszeit basierend auf dem reduzierten Betriebsleistungswert und dem (augenblicklich) erfassten Ladezustand eingerichtet ist. Die Vergleichseinheit kann zum Vergleichen der erneut bestimmten tatsächlichen Betriebszeit und der ersten Sollbetriebszeit eingerichtet sein. Mit anderen Worten kann nach einer Reduzierung der an den Verbraucher gelieferten Leistung überprüft werden, ob durch die Änderung der abgegebenen Leistung die gewünschte Sollbetriebszeit erreicht werden kann. Ist dies der Fall, so wird der Verbraucher unverändert mit der reduzierten Leistung, also dem reduzierten Betriebsleistungswert, weiter betrieben.

Ferner kann die Steuereinheit eingerichtet sein, eine Reduktion der Leistungsabgabe um mindestens einen weiteren vorgegebenen Leistungsreduktionswert zu bewirken, wenn die erneut bestimmte tatsächliche Betriebszeit zumindest geringer ist als die erste Sollbetriebszeit. Wird also festgestellt, dass die vorgenommene Leistungsreduzierung nicht ausreicht, um die erste Sollbetriebszeit zu erreichen (tatsächliche Betriebszeit < Sollbetriebszeit), kann eine weitere Reduktion der Leistungsabgabe an den Verbraucher bewirkt werden. In entsprechender, iterativer Weise kann die abgegebene Leistung in einer Ausführungsform des Haushaltsgeräts schrittweise so lange reduziert werden, bis die Sollwertzeit wieder erreicht wird.

Gemäß einer bevorzugten Ausführungsform kann die Steuereinheit eingerichtet sein, bei der ersten Leistungsstufe die Leistung nur bis zu einem maximalen vorgegebenen Gesamtleistungsreduktionswert zu reduzieren. Um eine zu starke Leistungsreduktion und eine damit beispielsweise einhergehende zu starke Saugleistungsreduktion, bei der keine ausreichende Reinigung durch einen Staubsauger mehr möglich ist, zu vermeiden, kann ein entsprechender Grenzwert vorgegeben werden.

Des Weiteren kann gemäß einer weiteren Ausführungsform vorgesehen sein, dass die Steuereinheit eingerichtet ist, die Leistungsabgabe um den weiteren vorgegebenen Leistungsreduktionswert frühestens nach Ablauf einer weiteren vorgegebenen Betriebsdauer des Verbrauchers zu reduzieren.

Darüber hinaus kann gemäß einer Ausführungsform des Haushaltsgeräts die Steuereinrichtung mindestens eine Recheneinheit eingerichtet zum Berechnen eines Leistungsreduktionswerts als ersten Leistungsreduktionswert umfassen, wobei der berechnete Leistungsreduktionswert geeignet ist, die Leistungsabgabe derart zu reduzieren, dass die erste Sollbetriebszeit erreicht wird. Anstelle einer schrittweisen Reduktion um vorgegebene Leistungsreduktionswerte kann alternativ auch der zur Erreichung der ersten Sollbetriebszeit erforderliche erste Leistungsreduktionswert (nahezu exakt) berechnet werden. Dies kann basierend auf der durch die Vergleichsoperation detektierten Abweichung zwischen tatsächlicher Betriebszeit und Sollbetriebszeit erfolgen. Dann kann die Steuereinheit eine Reduzierung der Leistung um den berechneten Leistungsreduktionswert bewirken. Es versteht sich, dass auch bei dieser Ausführungsform nach der Reduktion der Leistung entsprechend der obigen Ausführung eine Überprüfung durchgeführt werden kann, ob die erste Sollbetriebszeit tatsächlich erreicht wird.

Vorzugsweise kann die Steuereinrichtung mindestens eine Speichereinheit eingerichtet zum Speichern der ersten Sollbetriebszeit, des ersten Referenzladezustands (z.B. max. Ladezustand), der ersten vorgegebenen Betriebsdauer, der weiteren vorgegebenen Betriebsdauer, des ersten Leistungsreduktionswerts, des weiteren Leistungsreduktionswerts und/oder des Gesamtleistungsreduktionswerts zumindest für die erste einstellbare Leistungsstufe umfassen. Indem vorzugsweise sämtliche dieser Daten in einer Speichereinheit hinterlegt sind, kann in einfacher Weise überprüft werden, ob eine Leistungsreduzierung erforderlich ist. Und wenn sie erforderlich ist, kann die Leistungsreduktion in einfacher und definierter Weise durchgeführt werden, indem der entsprechende Leistungsreduktionswert ausgelesen und angewendet wird. Bevorzugt sind für sämtliche einstellbaren Leistungsstufen insbesondere sämtliche dieser Daten hinterlegt. Die Steuereinheit kann dann abhängig von der eingestellten (augenblicklichen) Leistungsstufe die gewünschten Daten aus der Speichereinheit auslesen und insbesondere anwenden.

Gemäß einer weiteren Ausführungsform kann das Haushaltsgerät ein Haushaltsreinigungsgerät sein. Das Haushaltsreinigungsgerät kann insbesondere ein Staubsauger sein. Das Haushaltsreinigungsgerät kann einen Grundkörper umfassen, an den z.B. ein oder mehrere (unterschiedliche) Zubehör/e zumindest ankoppelbar sind. Ein Zubehör ist insbesondere ein ankoppelbares Zubehörelement. Vorzugsweise kann das mindestens eine Zubehör ein aktives Zubehör (z.B. aktive Düse) oder ein passives Zubehör (z.B. passive Düse und/oder ein Verlängerungsschlauch mit Handhabungsgriff) sein. Ein aktives Zubehör weist mindestens einen elektrischen Verbraucher auf, wie einen elektrisch betriebenen Sensor und/oder einen elektrisch betriebenen Aktor. Ein Aktor kann beispielsweise ein Elektromotor zum Betreiben von einem Arbeitselement des Haushaltsreinigungsgeräts oder zum Betreiben von einem Arbeitselement des Zubehörs sein. Ein passives Zubehör umfasst hingegen keine elektrischen Verbraucher.

Ein weiterer Aspekt der Erfindung ist ein Verfahren zum Betreiben eines Haushaltsgeräts, insbesondere eines zuvor beschriebenen Haushaltsgeräts, wobei das Haushaltsgerät mindestens einen elektrischen Energiespeicher eingerichtet zum Versorgen von mindestens einem Verbraucher umfasst, wobei für den Betrieb des Verbrauchers mit einer ersten Leistungsstufe eine erste Sollbetriebszeit abhängig von einem Referenzladezustand des elektrischen Energiespeichers vorgegeben ist, wobei das Verfahren umfasst:
- Bestimmen der tatsächlichen Betriebszeit in Abhängigkeit eines erfassten Ladezustands des elektrischen Energiespeichers und der eingestellten ersten Leistungsstufe,
- Vergleichen der bestimmten tatsächlichen Betriebszeit mit der ersten Sollbetriebszeit, und
- Bewirken einer Reduktion der Leistungsabgabe um einen vorgegebenen ersten Leistungsreduktionswert, wenn die bestimmte tatsächliche Betriebszeit zumindest geringer ist als die erste Sollbetriebszeit.

Ein noch weiterer Aspekt der Erfindung ist ein Computerprogramm mit Instruktionen ausführbar auf einem Prozessor derart, dass ein Haushaltsgerät gemäß dem zuvor beschriebenen Verfahren betrieben wird.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Haushaltsgerät, das erfindungsgemäße Verfahren und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine perspektivische Ansicht eines ersten Ausführungsbeispiels eines Haushaltsgeräts gemäß der vorliegenden Erfindung,
- Fig. 2: ein Ablaufdiagramm eines Ausführungsbeispiels eines Verfahrens gemäß der vorliegenden Erfindung, und
- Fig. 3: eine perspektivische Ansicht eines weiteren Ausführungsbeispiels eines Haushaltsgeräts gemäß der vorliegenden Erfindung.

Nachfolgend werden für gleiche Elemente gleiche Bezugszeichen verwendet.

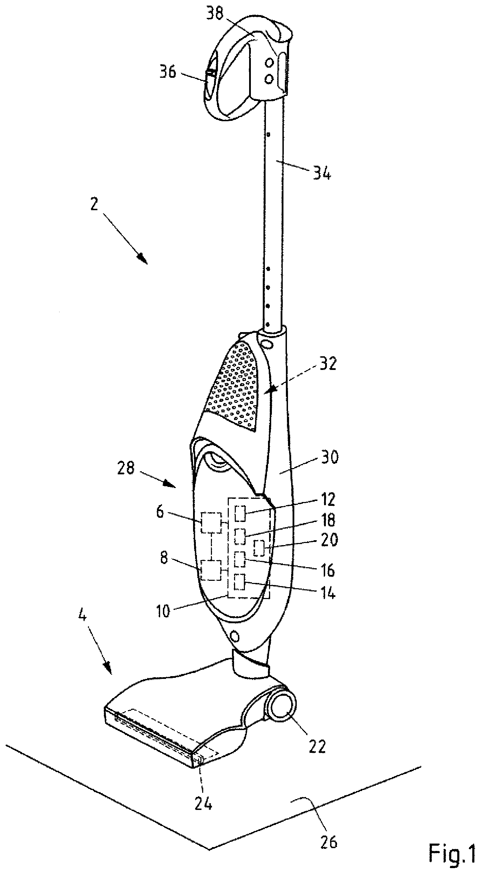

Die Figur 1 zeigt eine perspektivische Ansicht eines ersten Ausführungsbeispiels eines Haushaltsgeräts in Form eines Staubsaugers 2 gemäß der vorliegenden Erfindung. Der Staubsauger 2 kann kabellos betrieben werden kann.

Der Staubsauger 2 ist zur Reinigung einer Oberfläche, z.B. ein Boden 26, eingerichtet. Der Staubsauger 2 umfasst einen Grundkörper 30 und ein mit dem Grundkörper 30 verbundenes Zubehör 4. Das Zubehör 4 ist im vorliegenden Beispiel in Form eines passiven Zubehörs 4 ausgebildet. Ein passives Zubehör 4 umfasst keine elektrisch betriebenen Verbraucher. Das dargestellte Zubehör 4 umfasst ein passives Arbeitselement 24 in Form eines Borstenstreifens 24 und verfügt über Laufrollen 22.

Der Grundkörper 30 umfasst eine Saugvorrichtung 28 mit einem innenliegenden Arbeitselement in Form eines (nicht gezeigten) Sauggebläses. Das Sauggebläse wird von einem Elektromotor 6 angetrieben. Ferner umfasst die Saugvorrichtung 28 eine Aufnahme 32 für einen Staubbeutel (nicht dargestellt).

Darüber hinaus ist im vorliegenden Ausführungsbeispiel der Grundkörper 30 über eine Stange 34 mit einem Handgriff 38 verbunden, so dass ein Benutzer im Stehen den Staubsauger 2 betreiben kann. Die Stange 34 ist insbesondere eine Teleskopstange 34. Über einen Hauptschalter 36 kann ein Benutzer den Staubsauger 2 aktivieren. Bei der Aktivierung des Staubsaugers 2 wird insbesondere der Elektromotor 6 mit elektrischer Spannung beaufschlagt, um das Sauggebläse anzutreiben.

Die elektrische Energieversorgung erfolgt vorliegend über einen in dem Grundkörper 30 des Staubsaugers 2 installierten wiederaufladbaren elektrischen Energiespeicher 8.

Die Leistungsabgabe von dem elektrischen Energiespeicher 8 an den Elektromotor 6 wird durch eine Steuereinrichtung 10 gesteuert. Die Steuereinrichtung 10 weist hierfür eine entsprechend konfigurierte Steuereinheit 12 auf. Ferner umfasst die Steuereinrichtung 10 eine Erfassungseinheit 14 zum insbesondere kontinuierlichen Erfassen bzw. Messen des Ladezustands des elektrischen Energiespeichers 8.

Wie zu erkennen ist, umfasst die Steuereinrichtung 10 zudem eine Bestimmungseinheit 16, eine Vergleichseinheit 18 und eine Speichereinheit 20.

In der Speichereinheit 20 sind vorzugsweise sämtliche vorgegebenen Werte/Daten hinterlegt. Vorzugsweise kann zunächst für jede Leistungsstufe neben der zugehörigen Leistung die Sollbetriebszeit gespeichert sein. Ferner kann zumindest für jede Leistungsstufe mindestens ein erster Leistungsreduktionswert gespeichert sein. Für den Fall, dass bei einer Leistungsstufe zwei oder mehr Verbraucher mit (unterschiedlicher) Leistung versorgt werden, kann für jeden der Verbraucher ein erster (unterschiedlicher) Leistungsreduktionswert gespeichert sein. Ebenfalls kann für jede Leistungsstufe zumindest eine erste vorgegebene Betriebsdauer gespeichert sein.

Zumindest die Steuereinheit 12 und die Vergleichseinheit 18 können auf die Speichereinheit 20 zugreifen und die in der Speichereinheit 20 hinterlegten Daten anwenden.

Die Steuereinrichtung 10 kann durch Hardware (z.B. Prozessor, Speichermittel, etc.) und/oder Software gebildet sein. Die Einheiten 12 bis 20 können zumindest teilweise als separate Module ausgebildet oder in einem Element integriert sein.

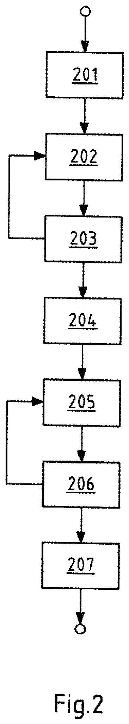

Nachfolgend wird die Steuerung der Leistungsabgabe an den Elektromotor 6 durch die Steuereinrichtung 10 mit Hilfe der Figur 2 näher erläutert. Die Figur 2 zeigt ein Ablaufdiagramm eines Ausführungsbeispiels eines Verfahrens gemäß der vorliegenden Erfindung.

In einem ersten Schritt 201 wird der Staubsauger 2 durch einen Benutzer in herkömmlicher Weise aktiviert. Insbesondere kann der Benutzer einen Betriebsmodus bzw. eine gewünschte Leistungsstufe (z.B. eine maximale Leistungsstufe für maximale Saugleistung oder eine Sparleistungsstufe für einen geringen Energieverbrauch) einstellen.

Die Steuereinrichtung 10 kann die eingestellte Leistungsstufe detektieren und die Steuereinheit 12 der Steuereinrichtung 10 kann den zugehörigen Betriebsleistungswert P_{B} beispielsweise aus der Speichereinheit 20 auslesen und anwenden. Nachfolgend wird beispielshaft davon ausgegangen, dass eine erste Leistungsstufe eingestellt wird, bei der der Elektromotor 6 mit einem ersten Betriebsleistungswert von P_{B1}= 250 W betrieben wird. Ferner ist für die erste Leistungsstufe eine erste Sollbetriebszeit von z.B. T_{Soll} = 10 min vorgegeben, wobei die erste Sollbetriebszeit bezogen ist auf einen bestimmten Referenzladezustand des elektrischen Energiespeichers 8. Der bestimmte Referenzladezustand ist vorzugsweise der maximale Ladezustand. Insbesondere stellt die erste Sollbetriebszeit daher die Zeit dar, mit der der Elektromotor 6 ausgehend von einem (nahezu) maximalen Ladezustand des Energiespeichers 8 in der Leistungsstufe betrieben werden soll.

In Schritt 201 wird zudem der bei der Aktivierung vorliegende Ladezustand des elektrischen Energiespeichers 8 von der Erfassungseinheit 14 erfasst. Es versteht sich, dass für den Fall, dass der Ladezustand nicht dem Referenzladezustand entspricht, abhängig von dem bei der Aktivierung erfassten Ladezustand und der vorgegebenen ersten Sollbetriebszeit eine an den erfassten Ladezustand angepasste erste Sollbetriebszeit bestimmt werden kann.

Vorzugsweise wird ab der Aktivierung des Staubsaugers 2 und während des Betriebs des Staubsaugers 2 der Ladezustand des elektrischen Energiespeichers 8 im Wesentlichen kontinuierlich von der Erfassungseinheit 14 erfasst.

In einem nächsten Schritt 202 kann die Bestimmungseinheit 16 basierend auf dem augenblicklichen Ladezustand und der eingestellten Leistungsstufe bzw. dem entsprechenden Betriebsleistungswert (hier P_{B1} = 250 W) die tatsächliche noch verbleibende Betriebszeit berechnen. Insbesondere kann der Schritt 202 erst nach einer ersten vorgegeben Betriebsdauer durchgeführt werden. Zumindest kann jedoch eine evtl. erforderliche Leistungsreduktion (vgl. Schritt 204) erst nach einer ersten vorgegeben Betriebsdauer durchgeführt werden.

Die erste vorgegebene Betriebsdauer hängt insbesondere von der ersten Sollbetriebszeit ab. Vorzugsweise liegt die erste vorgegebene Betriebsdauer zwischen 30 % und 70 % der ersten Sollbetriebszeit, insbesondere zwischen 40 % und 60 % der ersten Sollbetriebszeit. Im vorliegenden Beispiel wird davon ausgegangen, dass nach einer ersten vorgegeben Betriebsdauer von T_{D1} = 6 min die tatsächliche Sollbetriebszeit bestimmt wird. Es versteht sich, dass die erste vorgegebene Betriebsdauer auf einem maximalen Ausgangsladezustand basiert.

In einem Schritt 203 wird dann von der Vergleichseinheit 18 die tatsächliche Betriebszeit mit der ersten Sollbetriebszeit verglichen. Beispielsweise können hierfür die tatsächliche verbleibende Betriebszeit mit der verbleibenden Sollbetriebszeit ausgehend von der abgelaufenen Betriebsdauer verglichen werden. Auch kann vorgesehen sein, dass die verbleibende Betriebszeit auf die Gesamtbetriebszeit normiert wird und dieser Wert mit der Sollbetriebszeit verglichen wird.

Im vorliegenden Beispiel beträgt die verbleibende Sollbetriebszeit T_{VSoll} = 4 min. Für den Fall, dass bei dem Vergleich keine Abweichung detektiert wird, also die tatsächliche verbleibende Betriebszeit T_{VB} ≥ T_{VSoll} ist, bleibt die Leistungsabgabe an den Elektromotor 6 unverändert. In einem Ausführungsbeispiel können die Schritte 202 und 203 nach einer weiteren vorgebbaren Betriebsdauer erneut durchgeführt werden.

Beinhaltet das Vergleichsergebnis jedoch, dass die tatsächliche verbleibende Betriebsdauer zumindest kleiner als die vorgegebene verbleibenden Betriebsdauer ist (z.B. T_{VB} < T_{VSoll}), bewirkt die Steuereinheit 12 in Schritt 204 eine Reduzierung der Leistung um einen vorgegeben ersten Leistungsreduktionswert. Der erste vorgegebene Leistungsreduktionswert hängt insbesondere von der eingestellten Leistungsstufe ab. Der erste vorgegebene Leistungsreduktionswert kann zwischen 1 % und 10 % des Betriebsleistungswerts der eingestellten Leistungsstufe, vorzugsweise zwischen 3 % und 7 % des Betriebsleistungswerts der eingestellten Leistungsstufe, liegen. Im vorliegenden Beispiel ist der erste Leistungsreduktionswert P_{R1} = 10 W. Mit anderen Worten kann die Steuereinheit 12 eingerichtet sein, die Leistung, die an den Elektromotor 6 abgegeben wird, auf einen reduzierten Betriebsleistungswert von P_{RB} = 240 W zu reduzieren.

In den optionalen Schritten 205 und 206 kann überprüft werden, ob die vorgenommene Leistungsreduktion ausreichend ist, um die gewünschte erste Sollbetriebszeit zu erreichen. Hierzu kann in Schritt 205 entsprechend den Ausführungen zu Schritt 202 die tatsächliche Betriebszeit erneut bestimmt werden. Beispielsweise kann die erneute Bestimmung erst nach Ablauf einer weiteren vorgegebenen Betriebsdauer durchgeführt werden.

Nach einem Vergleich der erneut bestimmten Betriebszeit mit der ersten Sollbetriebszeit in Schritt 206 (vgl. Schritt 203) kann abhängig vom Vergleichsergebnis die Leistungsabgabe erneut von der Steuereinheit 12 reduziert werden (Schritt 207). Hierzu kann entsprechend den Ausführungen zu Schritt 204 die Steuereinheit 12 die derzeit abgegebene Leistung (z.B. P_{RB} = 240 W) um einen weiteren vorgegebenen Leistungsreduktionswert (z.B. P_{R2} = 10 W) reduzieren.

Für den Fall, dass die Vergleichseinheit 18 als Ergebnis liefert, dass durch die vorherige Reduzierung der Leistung nun die tatsächliche Betriebszeit größer oder gleich der Sollbetriebszeit ist, bleibt die Leistungsabgabe an den Elektromotor 6 unverändert. In einem Ausführungsbeispiel können die Schritte 205 und 206 nach einer weiteren vorgebbaren Betriebsdauer erneut durchgeführt werden.

Es versteht sich, dass nach einer (und jeder) weiteren Leistungsreduzierung in optionalen weiteren Schritten überprüft werden kann, ob die vorgenommene Leistungsreduktion ausreichend ist, um die gewünschte Sollbetriebszeit zu erreichen, um ggf. eine weitere Leistungsreduktion zu bewirken. Vorzugsweise kann jedoch insbesondere für jede Leistungsstufe ein maximaler Gesamtleistungsreduktionswert vorgegeben sein, um die die Leistung maximal reduziert werden darf.

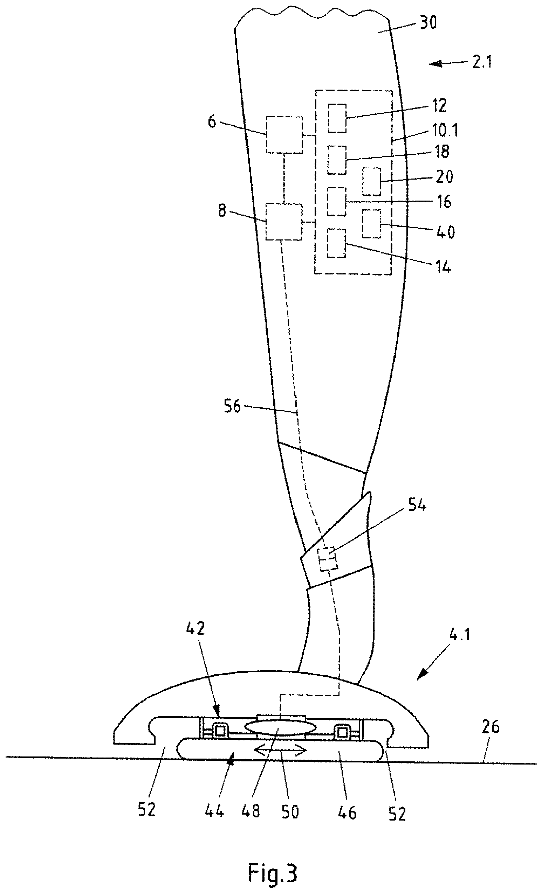

Figur 3 zeigt eine perspektivische Ansicht eines weiteren Ausführungsbeispiels eines Haushaltsgeräts in Form eines Staubsaugers 2.1 gemäß der vorliegenden Erfindung.

Der Staubsauger 2.1 umfasst ein aktives Zubehör 4.1, welches an einem Grundkörper 30 des Staubsaugers 2.1 angebracht ist. Das dargestellte Zubehör 4.1 in Form einer Saugpolierdüse umfasst eine als Arbeitselement ausgebildete Wischereinheit 42. Die Wischereinheit 42 umfasst einen Schwingkörper 44 und einen Wischtuchträger 46. Ein Elektromotor 48 ist zum Antreiben der Wischereinheit 42 vorgesehen. Der Elektromotor 48 kann eine schwingende oder rotierende Bewegung des Wischtuchträgers 46 erzeugen. Der Doppelpfeil 50 deutet beispielhaft eine lineare Bewegung des Schwingkörpers 44 an, mit der der Wischtuchträger 46 über den Boden 26 bewegt wird. Während dieser Bewegung erfolgt ein feuchtes oder trockenes Reinigen oder Polieren des Bodens 26. Zusätzlich können seitlich neben dem Schwingkörper 44 Saugkanäle 52 angeordnet sein, um Partikel aufzusaugen. Ein Wischtuch wird dabei beispielsweise mittels Klettverschlüssen am Wischtuchträger 46 abnehmbar befestigt.

Zur elektrischen Energieversorgung weist der Staubsauger 2.1 einen wiederaufladbaren elektrischen Energiespeicher 8 auf. Es versteht sich, dass mindestens ein weiterer elektrischer Energiespeicher beispielsweise im Zubehör 4.1 angeordnet sein kann.

Der Elektromotor 48 des aktiven Zubehörs 4.1 kann über eine Leitung 56 und eine elektrische Steckverbindung 54 mit elektrischer Leistung von dem elektrischen Energiespeicher 8 versorgt werden. Die Steuerung der Leistungsabgabe an die elektrischen Verbraucher, vorliegend die Elektromotoren 6 und 48, wird von der Steuereinrichtung 10.1 übernommen.

Insbesondere kann die Steuereinheit 12 der Steuereinrichtung 10.1 die Leistungsabgabe unter anderem abhängig von der eingestellten Leistungsstufe steuern. Beispielsweise kann es unterschiedliche Betriebsstufen geben, bei denen nur der Elektromotor 6 des Grundkörpers 30 oder nur der Elektromotor 48 des Zubehörs 4.1 oder beide Elektromotoren 6 und 48 aktiviert sind.

Die Steuereinrichtung 10.1 der Figur 3 umfasst entsprechend der Steuereinrichtung 10 der Figur 1 ferner eine Erfassungseinheit 14, eine Bestimmungseinheit 16, eine Vergleichseinheit 18 und eine Speichereinheit 20. Im Gegensatz zur Steuereinrichtung 10 gemäß dem Ausführungsbeispiel der Figur 1 weist die Steuereinrichtung 10.1 vorliegend zusätzlich eine Recheneinheit 40 auf.

Zunächst wird entsprechend den vorherigen Ausführungen durch die Einheiten 14 bis 18 bestimmt, ob eine vorgegebene Sollbetriebszeit tatsächlich erreicht werden kann.

Ist dies nicht der Fall, bestimmt die Recheneinheit 40 den mindestens einen ersten Leistungsreduktionswert zur Reduktion der Leistungsabgabe. Der erste Leistungsreduktionswert wird derart berechnet, dass dieser ausreichend ist, um nach einer Leistungsreduktion um den berechneten ersten Leistungsreduktionswert die gewünschte Sollbetriebszeit zu erreichen. Auch hier kann ein maximal zulässiger Leistungsreduktionswert vorgegeben sein.

Für den Fall, dass in einer Leistungsstufe die zumindest zwei Elektromotoren 6, 48 gleichzeitig betrieben werden, können in der Speichereinheit 20 Regeln hinterlegt sein, wie sich die erforderliche Leistungsreduktion auf die zumindest zwei Elektromotoren 6, 48 aufzuteilen hat.

### Bezugszeichenliste:

- 2, 2.1: Staubsauger
- 4, 4.1: Zubehör
- 6: Elektromotor
- 8: elektrischer Energiespeicher
- 10, 10.1: Steuereinrichtung
- 12: Steuereinheit
- 14: Erfassungseinheit
- 16: Bestimmungseinheit
- 18: Vergleichseinheit
- 20: Speichereinheit
- 22: Laufrollen
- 24: Borstenstreifen
- 26: Boden
- 28: Saugvorrichtung
- 30: Grundkörper
- 32: Staubbeutelaufnahme
- 34: Teleskopstange
- 36: Hauptschalter
- 38: Handgriff
- 40: Recheneinheit
- 42: Wischereinheit
- 44: Schwingkörper
- 46: Wischtuchträger
- 48: Elektromotor
- 50: Doppelpfeil
- 52: Saugkanäle
- 54: Steckverbindung
- 56: Leitung

## Patentansprüche

1. Haushaltsgerät (2, 2.1), umfassend:
- mindestens einen elektrischen Energiespeicher (8) eingerichtet zum Versorgen von mindestens einem Verbraucher des Haushaltsgeräts (2, 2.1) mit elektrischer Leistung,
- mindestens eine Steuereinrichtung (10, 10.1) mit mindestens einer Steuereinheit (12) eingerichtet zum Steuern der Leistungsabgabe an den Verbraucher abhängig von einer eingestellten Leistungsstufe,
- wobei für den Betrieb des Verbrauchers mit einer ersten Leistungsstufe eine erste Sollbetriebszeit abhängig von einem Referenzladezustand des elektrischen Energiespeichers (8) vorgegeben ist,
- wobei die Steuereinrichtung (10, 10.1) mindestens eine Erfassungseinheit (14) eingerichtet zum Erfassen des Ladezustands des elektrischen Energiespeichers (8) umfasst, und
- wobei die Steuereinrichtung (10, 10.1) mindestens eine Bestimmungseinheit (16) eingerichtet zum Bestimmen der tatsächlichen Betriebszeit basierend auf der eingestellten ersten Leistungsstufe und dem erfassten Ladezustand umfasst,
**dadurch gekennzeichnet, dass**
- die Steuereinrichtung (10, 10.1) mindestens eine Vergleichseinheit (18) eingerichtet zum Vergleichen der bestimmten tatsächlichen Betriebszeit und der ersten Sollbetriebszeit umfasst, und
- die Steuereinheit (12) eingerichtet ist, eine Reduzierung der Leistungsabgabe um mindestens einen ersten vorgegebenen Leistungsreduktionswert zu bewirken, wenn die bestimmte tatsächliche Betriebszeit zumindest geringer ist als die erste Sollbetriebszeit.

2. Haushaltsgerät (2, 2.1) nach Anspruch 1, **dadurch gekennzeichnet, dass** die Steuereinheit (12) eingerichtet ist, die Leistungsabgabe um den ersten Leistungsreduktionswert frühestens nach Ablauf einer ersten vorgegebenen Betriebsdauer des Verbrauchers zu reduzieren.

3. Haushaltsgerät (2, 2.1) nach Anspruch 2, **dadurch gekennzeichnet, dass** die erste vorgegebene Betriebsdauer zwischen 30 % und 70 % der ersten Sollbetriebszeit, vorzugsweise zwischen 40 % und 60 % der ersten Sollbetriebszeit, liegt.

4. Haushaltsgerät (2, 2.1) nach einem der vorherigen Ansprüche, **dadurch gekennzeichnet, dass** die Erfassungseinheit (14) zum im Wesentlichen kontinuierlichen Erfassen des Ladezustands des elektrischen Energiespeichers (8) eingerichtet ist.

5. Haushaltsgerät (2, 2.1) nach einem der vorherigen Ansprüche, **dadurch gekennzeichnet, dass** der erste vorgegebene Leistungsreduktionswert zwischen 1 % und 10 % des Betriebsleistungswerts der eingestellten Leistungsstufe, vorzugsweise zwischen 3 % und 7 % des Betriebsleistungswerts der eingestellten Leistungsstufe, liegt.

6. Haushaltsgerät (2, 2.1) nach einem der vorherigen Ansprüche, **dadurch gekennzeichnet, dass** nach einer Reduzierung der Leistungsabgabe
- die Bestimmungseinheit (16) zum Bestimmen der tatsächlichen Betriebszeit basierend auf dem reduzierten Betriebsleistungswerts und dem erfassten Ladezustand eingerichtet ist,
- die Vergleichseinheit (18) zum Vergleichen der erneut bestimmten tatsächlichen Betriebszeit und der ersten Sollbetriebszeit eingerichtet ist, und
- die Steuereinheit (12) eingerichtet ist, eine Reduktion der Leistungsabgabe um mindestens einen weiteren vorgegebenen Leistungsreduktionswert zu bewirken, wenn die erneut bestimmte Betriebszeit zumindest geringer ist als die erste Sollbetriebszeit.

7. Haushaltsgerät (2, 2.1) nach Anspruch 6, **dadurch gekennzeichnet, dass** die Steuereinheit (12) eingerichtet ist, die Leistungsabgabe um den weiteren vorgegebenen Leistungsreduktionswert frühestens nach Ablauf einer weiteren vorgegebenen Betriebsdauer des Verbrauchers zu reduzieren.

8. Haushaltsgerät (2, 2.1) nach einem der vorherigen Ansprüche, **dadurch gekennzeichnet, dass** die Steuereinheit (12) eingerichtet ist, bei der ersten Leistungsstufe die Leistung nur bis zu einem maximalen Gesamtleistungsreduktionswert zu reduzieren.

9. Haushaltsgerät (2, 2.1) nach Anspruch 1, **dadurch gekennzeichnet, dass**
- die Steuereinrichtung (10, 10.1) mindestens eine Recheneinheit (40) eingerichtet zum Berechnen eines Leistungsreduktionswerts als ersten Leistungsreduktionswert umfasst,
- wobei der berechnete Leistungsreduktionswert geeignet ist, die Leistungsabgabe derart zu reduzieren, dass die erste Sollbetriebszeit erreicht wird.

10. Haushaltsgerät (2, 2.1) nach einem der vorherigen Ansprüche, **dadurch gekennzeichnet, dass** die Steuereinrichtung (10, 10.1) mindestens eine Speichereinheit (20) eingerichtet zum Speichern der ersten Sollbetriebszeit, des Referenzladezustands, der ersten vorgegebenen Betriebsdauer, der weiteren vorgegebenen Betriebsdauer, des ersten Leistungsreduktionswerts, des weiteren Leistungsreduktionswerts und/oder den Gesamtleistungsreduktionswert zumindest für die erste einstellbare Leistungsstufe umfasst.

11. Haushaltsgerät (2, 2.1) nach einem der vorherigen Ansprüche, **dadurch gekennzeichnet, dass** das Haushaltsgerät (2, 2.1) ein Haushaltsreinigungsgerät (2, 2.1) ist.

12. Verfahren zum Betreiben eines Haushaltsgeräts (2, 2.1), insbesondere eines Haushaltsgeräts (2, 2.1) nach einem der vorherigen Ansprüche, wobei das Haushaltsgerät (2, 2.1) mindestens einen elektrischen Energiespeicher (8) eingerichtet zum Versorgen von mindestens einem Verbraucher umfasst, wobei für den Betrieb des Verbrauchers mit einer ersten Leistungsstufe eine erste Sollbetriebszeit abhängig von einem Referenzladezustand des elektrischen Energiespeichers (8) vorgegeben ist, wobei das Verfahren umfasst:
- Bestimmen der tatsächlichen Betriebszeit in Abhängigkeit eines erfassten Ladezustands des elektrischen Energiespeichers (8) und der eingestellten ersten Leistungsstufe,
- Vergleichen der bestimmten tatsächlichen Betriebszeit mit der ersten Sollbetriebszeit, und
- Bewirken einer Reduktion der Leistungsabgabe um einen vorgegebenen ersten Leistungsreduktionswert, wenn die bestimmte tatsächliche Betriebszeit zumindest geringer ist als die erste Sollbetriebszeit.

13. Computerprogrammprodukt mit Instruktionen ausführbar auf einem Prozessor derart, dass ein Haushaltsgerät (2, 2.1) gemäß dem Verfahren nach Anspruch 12 betrieben wird.

## Claims

1. A household appliance (2, 2.1), comprising:
- at least one electrical energy storage (8) configured to supply at least one consumer of the household appliance (2, 2.1) with electrical power,
- at least one control device (10, 10.1) having at least one control unit (12) configured to control the power output to the consumer depending on a set power stage,
- wherein a first set operating time is specified depending on a reference charging state of the electrical energy storage (8) for operating the consumer with a first power stage,
- wherein the control device (10, 10.1) comprises at least one detection unit (14) configured to detect the charging state of the electrical energy storage (8), and
- wherein the control device (10, 10.1) comprises at least one determination unit (16) configured to determine the actual operating time based on the set first power stage and the detected charging state,
**characterized in that**
- the control device (10, 10.1) comprises at least one comparison unit (18) configured to compare the determined actual operating time and the first set operating time, and
- the control unit (12) is configured to cause a reduction of the power output by at least a first predetermined power reduction value if the determined actual operating time is at least less than the first set operating time.

2. Household appliance (2, 2.1) according to claim 1, **characterized in that** the control unit (12) is configured to reduce the power output by the first power reduction value at the earliest after expiry of a first predetermined operating period of the consumer.

3. Household appliance (2, 2.1) according to claim 2, **characterized in that** the first predetermined operating time is between 30% and 70% of the first set operating time, preferably between 40% and 60% of the first set operating time.

4. Household appliance (2, 2.1) according to one of the previous claims, **characterized in that** the detection unit (14) is adapted for substantially continuously detecting the charging state of the electric energy storage (8).

5. Household appliance (2, 2.1) according to one of the previous claims, **characterized in that** the first predetermined power reduction value is between 1 % and 10 % of the operating power value of the set power stage, preferably between 3 % and 7 % of the operating power value of the set power stage.

6. Household appliance (2, 2.1) according to one of the previous claims, **characterized in that,** after a reduction of the power output
- the determination unit (16) is configured to determine the actual operating time based on the reduced operating power value and the detected charging state,
- the comparison unit (18) is configured to compare the re-determined actual operating time and the first set operating time, and
- the control unit (12) is configured to cause a reduction of the power output by at least one further predetermined power reduction value if the re-determined operating time is at least less than the first set operating time.

7. Household appliance (2, 2.1) according to claim 6, **characterized in that** the control unit (12) is configured to reduce the power output by the further predetermined power reduction value at the earliest after expiry of a further predetermined operating period of the consumer.

8. Household appliance (2, 2.1) according to one of the previous claims, **characterized in that** the control unit (12) is configured to reduce the power at the first power stage only up to a maximum total power reduction value.

9. Household appliance (2, 2.1) according to claim 1, **characterized in that**
- the control device (10, 10.1) comprises at least one computing unit (40) configured to calculate a power reduction value as the first power reduction value,
- wherein the calculated power reduction value is adapted to reduce the power output such that the first set operating time is achieved.

10. Household appliance (2, 2.1) according to one of the previous claims, **characterized in that** the control device (10, 10.1) comprises at least one storage unit (20) configured to store the first set operating time, the reference charge state, the first predetermined operating time, the further predetermined operating time, the first power reduction value, the further power reduction value and/or the total power reduction value at least for the first settable power stage.

11. Household appliance (2, 2.1) according to one of the previous claims, **characterized in that** the household appliance (2, 2.1) is a household cleaning appliance (2, 2.1).

12. Method for operating a household appliance (2, 2.1), in particular a household appliance (2, 2.1), in accordance with one of the previous claims, the household appliance (2, 2.1) comprising at least one electrical energy storage (8) which is configured to supply at least one consumer, wherein a first set operating time is specified depending on a reference charging state of the electrical energy storage (8) for operating the consumer with a first power stage, the method comprising:
- determining the actual operating time depending on a detected charging state of the electrical energy storage (8) and the set first power stage,
- comparing the determined actual operating time with the first set operating time, and
- causing a reduction of power output by a predetermined first power reduction value if the determined actual operating time is at least less than the first set operating time.

13. A computer program product with instructions executable on a processor such that a household appliance (2, 2.1) is operated in accordance with the method according to claim 12.

## Revendications

1. Appareil électroménager (2, 2.1) comprenant :
- au moins un accumulateur d'énergie électrique (8) conçu pour l'alimentation en puissance électrique au moins d'un récepteur de l'appareil électroménager (2, 2.1),
- au moins un dispositif de commande (10, 10.1) ayant au moins une unité de commande (12) conçue pour commander la puissance fournie au récepteur en fonction d'un niveau de puissance réglé,
- où, pour le fonctionnement du récepteur à un premier niveau de puissance, un premier temps de fonctionnement théorique est prédéfini en fonction d'un état de charge de référence de l'accumulateur d'énergie électrique (8),
- où le dispositif de commande (10, 10.1) comprend au moins une unité de détection (14) conçue pour la détection de l'état de charge de l'accumulateur d'énergie électrique (8), et
- où le dispositif de commande (10, 10.1) comprend au moins une unité de détermination (16) conçue pour la détermination du temps de fonctionnement réel, en se basant sur le premier niveau de puissance réglé et sur l'état de charge détecté,
**caractérisé**
- **en ce que** le dispositif de commande (10, 10.1) comprend au moins une unité de comparaison (18) conçue pour la comparaison du temps de fonctionnement réel déterminé et du premier temps de fonctionnement théorique, et
- **en ce que** l'unité de commande (12) est conçue pour déclencher une réduction de la puissance débitée d'au moins une première valeur de réduction prédéfinie de la puissance quand le temps de fonctionnement réel déterminé est au moins inférieur au premier temps de fonctionnement théorique.

2. Appareil électroménager (2, 2.1) selon la revendication 1, **caractérisé en ce que** l'unité de commande (12) est conçue pour réduire la puissance débitée, au plus tôt au terme d'une première durée de fonctionnement prédéfinie du récepteur, ladite puissance débitée étant réduite de la première valeur de réduction de puissance.

3. Appareil électroménager (2, 2.1) selon la revendication 2, **caractérisé en ce que** la première durée de fonctionnement prédéfinie est comprise entre 30 % et 70 % du premier temps de fonctionnement théorique, de préférence comprise entre 40 % et 60 % du premier temps de fonctionnement théorique.

4. Appareil électroménager (2, 2.1) selon l'une quelconque des revendications précédentes, **caractérisé en ce que** l'unité de détection (14) est conçue pour la détection pratiquement continue de l'état de charge de l'accumulateur d'énergie électrique (8).

5. Appareil électroménager (2, 2.1) selon l'une quelconque des revendications précédentes, **caractérisé en ce que** la première valeur de réduction de puissance prédéfinie est comprise entre 1 % et 10 % de la valeur de puissance de fonctionnement du niveau de puissance réglé, de préférence comprise entre 3 % et 7 % de la valeur de puissance de fonctionnement du niveau de puissance réglé.

6. Appareil électroménager (2, 2.1) selon l'une quelconque des revendications précédentes, **caractérisé en ce que**, après une réduction de la puissance débitée :
- l'unité de détermination (16) est conçue pour la détermination du temps de fonctionnement réel, en se basant sur la valeur de puissance de fonctionnement réduite et sur l'état de charge détecté,
- l'unité de comparaison (18) est conçue pour la comparaison du temps de fonctionnement réel déterminé à nouveau et du premier temps de fonctionnement théorique, et
- l'unité de commande (12) est conçue pour provoquer une réduction de la puissance débitée quand le temps de fonctionnement déterminé à nouveau est au moins inférieur au premier temps de fonctionnement théorique, ladite puissance débitée étant réduite au moins d'une autre valeur de réduction - prédéfinie - de la puissance.

7. Appareil électroménager (2, 2.1) selon la revendication 6, **caractérisé en ce que** l'unité de commande (12) est conçue pour réduire la puissance débitée au plus tôt au terme d'une autre durée de fonctionnement prédéfinie du récepteur, ladite puissance débitée étant réduite de l'autre valeur de réduction - prédéfinie - de la puissance.

8. Appareil électroménager (2, 2.1) selon l'une quelconque des revendications précédentes, **caractérisé en ce que** l'unité de commande (12) est conçue pour réduire la puissance, quand celle-ci est à son premier niveau de puissance, seulement jusqu'à une valeur de réduction maximale de la puissance totale.

9. Appareil électroménager (2, 2.1) selon la revendication 1,
**caractérisé**
- **en ce que** le dispositif de commande (10, 10.1) comprend au moins une unité de calcul (40) conçue pour le calcul d'une valeur de réduction de la puissance, ladite valeur étant considérée comme une première valeur de réduction de la puissance,
- où la valeur de réduction de la puissance, qui a été calculée, est appropriée pour réduire la puissance débitée, de manière telle que le premier temps de fonctionnement théorique soit atteint.

10. Appareil électroménager (2, 2.1) selon l'une quelconque des revendications précédentes, **caractérisé en ce que** le dispositif de commande (10, 10.1) comprend au moins une unité de stockage en mémoire (20) conçue pour le stockage en mémoire du premier temps de fonctionnement théorique, de l'état de charge de référence, de la première durée de fonctionnement prédéfinie, de l'autre durée de fonctionnement prédéfinie, de la première valeur de réduction de la puissance, de l'autre valeur de réduction de la puissance et/ou comprend la valeur de réduction de la puissance totale au moins pour le premier niveau de puissance pouvant être réglé.

11. Appareil électroménager (2, 2.1) selon l'une quelconque des revendications précédentes, **caractérisé en ce que** l'appareil électroménager (2, 2.1) est un appareil (2, 2.1) pour le nettoyage ménager.

12. Procédé de fonctionnement d'un appareil électroménager (2, 2.1), en particulier d'un appareil électroménager (2, 2.1) selon l'une quelconque des revendications précédentes, où l'appareil électroménager (2, 2.1) comprend au moins un accumulateur d'énergie électrique (8) conçu pour l'alimentation au moins d'un récepteur, où, pour le fonctionnement du récepteur à un premier niveau de puissance, un premier temps de fonctionnement théorique est prédéfini en fonction d'un état de charge de référence de l'accumulateur d'énergie électrique (8), où le procédé consiste :
- à déterminer le temps de fonctionnement réel en fonction d'un état de charge - détecté - de l'accumulateur d'énergie électrique (8) et en fonction du premier niveau de puissance réglé,
- à comparer le temps de fonctionnement réel déterminé, avec le premier temps de fonctionnement théorique, et
- à provoquer une réduction de la puissance débitée d'une première valeur de réduction prédéfinie de la puissance quand le temps de fonctionnement réel déterminé est au moins inférieur au premier temps de fonctionnement théorique.

13. Produit logiciel informatique comportant des instructions pouvant être mises en œuvre sur un processeur, de manière telle qu'un appareil électroménager (2, 2.1) soit actionné conformément au procédé selon la revendication 12.
